# EUROPEAN PATENT SPECIFICATION

(11) **EP 2 274 376 B1**
(45) Date of publication and mention of the grant of the patent: **05.10.2011**
(21) Application number: 09735438.5
(22) Date of filing: 21.04.2009
(51) Int. Cl.: C08L 23/02

(54) **OXYGEN BARRIER COMPOSITION**
SAUERSTOFFBARRIEREZUSAMMENSETZUNG
COMPOSITION DE BARRIÈRE À L'OXYGÈNE

(30) Priority: 25.04.2008 EP 08155155
(43) Date of publication of application: 19.01.2011
(73) Proprietor: INEOS Manufacturing Belgium NV, 2040 Antwerpen (BE)
(72) Inventor: CHAI, Choon Kooi, B-3090 Overijse (BE); PLUME, Denis Albert Maurice, B-B1800 Vilvoorde (BE)
(74) Representative: Smith, Julian Philip Howard
(86) International application number: PCT/EP2009/054710
(87) International publication number: WO 2009/130200

(56) References cited:
- EP-A- 0 411 601
- WO-A-88/02764
- US-A1- 2005 181 156

## Description

The present invention relates generally to the field of oxygen barrier polymers, and more particularly to the blends of polyolefins and oxygen barrier polymers for use in food packaging.

It is well known that limiting the exposure of oxygen-sensitive products to oxygen maintains and enhances the quality and shelf-life of the product. For instance, by limiting the oxygen exposure of such food products in a packaging system, the quality of the food product is maintained and food spoilage is avoided. In addition such packaging also keeps the product in inventory longer, thereby reducing costs incurred from waste and restocking. Polyolefins are widely used as packaging materials, but although they do have good water vapour barrier properties, their use is limited in packaging or containers for oxygen-sensitive agrochemicals and foods, because their oxygen barrier properties are insufficient.

Oxygen barrier film packaging, in which oxygen is physically prevented from entering the packaging environment, is already known in the food packaging industry. Such oxygen barriers are known as passive barriers. Examples of such oxygen barrier polymers include ethylene-vinyl alcohol (EVOH) and polyamide (PA). Typically in packaging applications they can either form one layer of a multilayer package, or they can be blended with another packaging material such as a polyolefin. It is also known to blend EVOH and PA together in a barrier layer, such as disclosed in US2006110554.

It is also known to use nanocomposites as passive oxygen barriers, as disclosed for example in WO2003055792, in which compositions containing a polyamide/ nanocomposite or EVOH/nanocomposite blend are disclosed. In US 7270862, a blend of a polyolefin and a polyamide/nanocomposite is disclosed. Nanocomposites are polymer compositions containing nanoclays (sometimes called nanofillers), which differ from conventional fillers such as talc in their particle size, which is in the nanometre range. The mode of action of clay-based nanofillers is due to their extremely high aspect ratio (ratio of width to thickness). The starting clay materials are layered structures: when incorporated in a polymer matrix after chemical treatment and intercalation in order to be made organophilic, exfoliation and delamination occurs, which - in an idealized case - leads to individual platelets with thicknesses of about 1nm which are dispersed in the polymer. Disadvantages with nanocomposites are that they are expensive, and can be difficult to incorporate into polymers.

Another technique for limiting oxygen exposure involves incorporating an oxygen scavenger into the packaging structure. Incorporation of a scavenger in the package has mainly been used to remove headspace oxygen within the package in a short period of time. In this case the oxygen scavenger typically is contained in a polymer having a high oxygen transmission rate, which ensures that the headspace oxygen in the package quickly reaches the oxygen scavenging site and the oxygen level be reduced in a short period of time.

It is also known to provide a blend of an oxygen barrier polymer such as EVOH and an oxygen scavenging polymer, which blend can form a layer in a packaging material. Such blends are described in US 2002002238A, where it is explained that because of the low accessibility of oxygen to the oxygen scavenging polymer due to the presence of the oxygen barrier polymer, only trace oxygen reaches the oxygen scavenging polymer, which is therefore not consumed quickly and consequently has a long period of useful life. In WO99/14287, a blend suitable for packaging fruit or vegetable juices is described comprising a low-densiy polyethylene or EVOH with an acid-activatable oxygen scavenger such as ferrous carbonate and a compatibiliser. Some forms of EVOH can be used as compatibilisers. For example, WO88/002764 discloses the use of EVOH containing from 50 to 95mol% of ethylene units as a compatibiliser between polyamides and polyolefins. However compatibilising properties require a high ethylene content, and are not known in EVOH having a lower ethylene content.

We have now found that particular combinations of the various types of oxygen barrier can result in compositions having unexpectedly good oxygen barrier properties.

Accordingly, in a first aspect the present invention provides a composition comprising
70 - 95 wt% of a polyolefin, and incorporated in said polyolefin -
0.1-10 wt% of an ethylene-vinyl alcohol polymer containing between 27mol% and 44mol% of ethylene units;
0.1 - 5 wt% of an active oxygen scavenger;
0.1-10 wt% of either a clay having an aspect ratio of at least 10, preferably at least 20, more preferably at least 50, or a nucleating agent, or a polyamide optionally containing such a clay or nucleating agent; and
0.1 - 5 wt% of a compatibiliser.

By "active oxygen scavenger" is meant any compound which reacts chemically with oxygen and is consumed by the reaction. This irreversible process distinguishes active oxygen scavengers from those compounds which remove oxygen by physical entrapment/absorption. Polyamides are known to remove oxygen by physical entrapment/absorption. However they are also known to act as active oxygen scavengers when in the presence of transition metals, which act as catalysts for an oxidation reaction. For the purposes of the present invention therefore, the term "polyamide" is intended to mean a polyamide which acts as a physical oxygen barrier, ie a polyamide without any associated catalytic metal: whereas a polyamide which is present together with a catalytic amount of a transition metal is categorised in the present invention only as an "active oxygen scavenger".

By "compatibiliser" is meant any compound which improves the compatibility or miscibility of the composition.

"Aspect ratio" is defined as the ratio of the longest length of the particles to either their width or diameter.

The polyolefin is preferably a polyethylene or polypropylene, or a block copolymer thereof. In the case of polyethylene, it may be high density polyethylene (HDPE), low density polyethylene (LDPE) or linear low density polyethylene (LLDPE). The polyethylene may be a homopolymer or copolymer.

The ethylene-vinyl alcohol polymer (EVOH) is a random copolymer of ethylene and vinyl alcohol. EVOH products can contain varying ratios of ethylene to vinyl alcohol; the compositions of the invention contain between 27mol% and 44mol% of ethylene units, preferably 27-38mol% of ethylene units. The amount of ethylene-vinyl alcohol polymer in the composition is preferably between 3 and 8 wt%.

The polyamide can be aliphatic or aromatic. Preferred polyamides are a metaxylene diamine 6 nylon (MXD6), or a polyamide 6 based nylon. Copolymers and terpolymers of these nylons may also be employed. Specifically preferred are nylon 6; nylon 6,6; amorphous polyamide; and nylon 6,12. The amount of polyamide in the composition, whether or not containing a clay or nucleating agent, is preferably between 0.2 and 5wt%.

The oxygen scavenger is preferably selected from the group consisting of metal powders having a reducing property, such as reducing iron powder, reducing zinc powder and reducing tin powder, low-valence metal oxides such as ferrous oxide and tri-iron tetroxide, and reducing metal compounds such as iron carbide, iron silicide, iron carbonyl and iron hydroxide. The oxygen scavenger can be used in combination with an assistant such as a hydroxide, carbonate, sulfite, thiosulfate, tertiary phosphate, secondary phosphate, organic acid salt or halide of an alkali metal or alkaline earth metal, or active carbon, active alumina or activated clay according to need. Most preferably the oxygen scavenger is a reducing iron powder, a reducing zinc powder, a reducing tin powder, a low-valence metal oxide, or a reducing metal compound. The amount of oxygen scavenger in the composition is preferably between 0.5 and 5wt%.

The clay having a high aspect ratio is preferably a nanoclay. By "nanoclay" is meant inorganic clay in the form of nano-size particles having a very high aspect ratio. Preferred nanoclays are the class of smectite clays, which are 2:1 type layer silicates with an expandable structure. Examples of smectite-type clays are montmorillonite, nontronite, beidellite, volkonskoite, hectorite, bentonite, saponite, sauconite, magadite, kenyaite and vermiculite. These clays are composed of packets of face to face stacking of individual silicate layers or sheets. The thickness of the sheets is about 1 nm and the longest length of the sheets is typically from 50 to 1000 nm resulting in aspect ratios of 50 to 1000. Preferred are bentonite (aluminium magnesium silicate) and hectorite (magnesium lithium silicate) clays, with hectorite being the most preferred.

The nucleating agent may be sodium 2,2'-methylenebis-(4,6-di-tert-butylphenyl)phosphate, or a sorbitol-based agent such as (1,3:2,4) dibenzylidene sorbitol, (1,3:2,4) diparamethyldibenzylidene sorbitol. However it is preferably an inorganic filler having a sedimentation particle size distribution (Sedigraph 5100) characterised by d50 ≤ 2.5 µm and d95 ≤ 6.5 µm, where d50 is the average equivalent spherical diameter at 50 cumulative mass % and d95 is the average equivalent spherical diameter at 95 cumulative mass %. Most preferably the nucleating agent is talc.

When the clay or nucleating agent is present in the composition independent of any polyamide, the amount of clay or nucleating agent in the composition is preferably between 0.2 and 5wt% based on the total weight of the composition. When the clay or nucleating agent is contained within a polyamide, the amount of clay/nucleating agent in the polyamide is preferably between 0.1 and 2wt% based on the total weight of clay/nucleating agent plus polyamide.

The compatibilizer is preferably selected from an epoxy-modified polystyrene copolymer, an ethylene-ethylene anhydride- acrylic acid copolymer, an ethylene-ethyl acrylate copolymer, an ethylene- alkyl acrylate-acrylic acid copolymer, a maleic anhydride modified (graft) high- density polyethylene, a maleic anhydride modified (graft) linear low-density polyethylene, an ethylene-alkyl methacrylate-methacrylic acid copolymer, an ethylene-butyl acrylate copolymer, an ethylene-vinyl acetate copolymer, a maleic anhydride modified (graft) ethylene-vinyl acetate copolymer, and modifications thereof, can be used. Preferred compatibilizers include a maleic anhydride modified linear low-density polyethylene, an anhydride-modified or acid-modified poly(ethylene acrylate), poly(ethylene vinyl acetate), or polyethylene.

Preferably the compositions of the invention also include an antioxidant. Typical antioxidants include materials which inhibit oxidative degradation or cross-linking of polymers. Antioxidants such as 2,6-di(t-butyl)-4-methylphenol(BHT), 2,2'-methylene-bis(6-t-butyl-p-cresol), triphenylphosphite, tris-(nonylphenyl)phosphite, vitamin E, tetrabismethylene 3-(3,5-ditertbutyl-4-hydroxyphenyl)-propionate methane, and dilaurylthiodipropionate are suitable. Typically, they are present in about 0.01 to 1% by weight of the composition.

Other additives which can be included in the compositions of the invention include, but are not necessarily limited to, fillers, pigments, dyestuffs, stabilizers, processing aids, plasticizers, fire retardants, and anti-fog agents, among others.

A further aspect of the invention provides an article comprising a composition according to the invention. Preferred articles are containers, closure members, packaging materials or pipes.

Containers typically come in several forms such as a single layer flexible container, a multilayer flexible container, a single layer rigid container or a multilayer rigid container. Typical rigid or semi-rigid containers include cartons or bottles such as juice containers, soft drink containers, thermoformed trays, or cups, which have wall thicknesses in the range of 100 to 1000 micrometres. A container comprising a composition according to the invention is particularly suitable for food or drink applications. However it may alternatively be for non-food items, for example a drum or fuel tank. Preferred containers are bottles.

The composition of the invention can form a single layer in a multilayer article of the invention, or can comprise the only layer. Other layers may be made of paper, paperboard, cardboard or plastic. Suitable plastics for other layers include polyethylene, low density polyethylene, very low density polyethylene, ultra-low density polyethylene, high density polyethylene, polyvinyl chloride, ethylene-vinyl acetate, ethylene-alkyl (meth)acrylates, ethylene-(meth)acrylic acid, PET, polyamides, polypropylene, or ethylene-(meth)acrylic acid ionomers.

The closure member is typically a stopper or a cap. The composition of the invention may form part or all of the closure. Particularly preferred is a monocomponent cap.

The packaging material may be rigid or flexible, and may be a single layer or one layer of a multilayer material. Typical thickness is 5 to 250 micrometres.

The article comprising the composition of the invention can be used for any product for which it is desirable to inhibit oxygen damage during storage, e.g. food, beverage, pharmaceuticals, medical products, cosmetics, corrodible metals, or electronic devices. It is especially suitable for food or drink packaging, and more particularly for packaging products for which it is desirable to maintain a high oxygen barrier for a long period of time, such as beer, wine, and other beverages.

The composition of all aspects of the invention is preferably made by blending the components together. All the components may be blended together in a single operation, or alternatively a masterbatch comprising some or all of the non-polyolefin components may be made first, and this blended with the polyolefin and any remaining components, which themselves may be added separately or pre-blended.

### EXAMPLES

All EVOH products used in the Examples below contain between 27 and 38mol% of ethylene.

### EXAMPLES 1 and 2 (comparative) - polyamide + EVOH

### Masterbatch of polyamide + EVOH

Masterbatches of a polyamide MXD-6 (S6007, manufactured by Mitsubishi Chemical Corporation), EVOH (SOARNOL ET3803, manufactured by Nippon Gohsei Osaka), a compatibiliser (Modic AP-M704, manufactured by Mitsubishi Chemical Corporation) plus an antioxidant additive (Irganox B225) were first dried overnight at 60-100°C under vacuum, and then compounded on an APV-19 (MP19TC-25) twin screw laboratory scale extruder (manufactured by APV Baker with a barrel diameter 19 mm and barrel length 25:1 L/D) under the following conditions, and at the ratios given in the Table below.

### Masterbatch compounding conditions

Screw speed = 300 rpm
Nitrogen setting = maximum
Temperature: TZ1 = 230°C, TZ2 = 235°C, TZ3 = 240°C, TZ4 = TZ5 = 250°C

| EXAMPLE | 1 | 2 |
|---|---|---|
| Polyamide (wt%) | 15 | 5 |
| EVOH (wt%) | 55 | 75 |
| Compatibiliser (wt%) | 30 | 20 |
| Antioxidant (wt%) | 0.3 | 0.3 |

After compounding the masterbatch was dried overnight at 100°C under vacuum, and then compounded in the APV-19 twin screw extruder with a high density polyethylene (Eltex B4020N1343 - containing the normal additives package) pellets at a weight ratio of 10wt% masterbatch to 90wt% polyethylene.

### Final composition compounding conditions

Screw speed = 400 rpm
Nitrogen setting = maximum
Temperature: TZ1 = TZ2 = TZ3 = TZ4 = 230°C, TZ5 = 250°C

The final composition was then formed into caps by injection using Netstal Synergy 1000-460 injection moulding line (Injection unit: 460; single screw: diameter 40mm; an Antonin 12 cavities mould and a Husky hot block) with the temperature and injection profiles below. The caps were then stored in sealed bags under nitrogen protection.

| Moulding Temperature (°C) | Zone TH10 = TH13 = 250°; TH14 = 240°; TH15 = 230°; TH16 = 220°; TH17 = TH18 = 210° |
|---|---|
| Mould Temperature (°C) | 10 |
| Injection Time (s) | 0.9 |
| Holding Pressure (bar) | 1100 to 1200 |
| Holding Time (s) | 2 |
| Cooling Time (s) | 3 |
| Cycle Time (s) | 9 |

### EXAMPLE 3 (comparative) - nanoclay-containing polyamide + EVOH

### Masterbatch of nanoclay-containing polyamide + EVOH

Masterbatches of a polyamide Nylon 5034C2 containing 2wt% nanoclays (manufactured by Ube Industries, Ltd), EVOH (SOARNOL ET3803, manufactured by Nippon Gohsei Osaka), a compatibiliser (Modic AP-M704, manufactured by Mitsubishi Chemical Corporation) plus an antioxidant additive (Irganox B225) were dried and compounded in the same amounts and under the same conditions as in Example 2.

After compounding the masterbatch was dried overnight at 100°C under vacuum, and then compounded in the APV-19 twin screw extruder with a high density polyethylene (Eltex B4020N1343) pellets in the amounts shown in the table below, under the compounding conditions shown below.

### Final composition compounding conditions

Screw speed = 400 rpm
Nitrogen setting = maximum
Temperature: TZ1 = TZ2 = 170°C TZ3 = TZ4 = 175°C, TZ5 = 170°C

| EXAMPLE | 3 |
|---|---|
| Masterbatch (wt%) | 10 |
| HDPE (wt%) | 90 |

### EXAMPLES 4 - 6: nanoclay-containing polyamide + EVOH + oxygen scavenger

### Masterbatch of nanoclay-containing polyamide + EVOH + oxygen scavenger

Masterbatches of a polyamide Nylon 5034C2 containing 2wt% nanoclays (manufactured by Ubc Industries, Ltd), EVOH (SOARNOL ET3803, manufactured by Nippon Gohsei Osaka), a compatibiliser (Modic AP-M704, manufactured by Mitsubishi Chemical Corporation) plus an antioxidant additive (Irganox B225) were dried and compounded in the same amounts and under the same conditions as in Example 2.

After compounding the masterbatch was dried overnight at 100°C under vacuum, and then compounded in the APV-19 twin screw extruder with a high density polyethylene (Eltex B4020N1343) pellets and an oxygen scavenger in the amounts shown in the table below, under the compounding conditions shown below.

### Final composition compounding conditions

Screw speed = 400 rpm
Nitrogen setting = maximum
Temperature: TZ 1 = TZ2 = 170°C TZ3 = TZ4 = 175°C, TZ5 = 170°C

| EXAMPLE | 4 | 5 * | 6 * |
|---|---|---|---|
| Masterbatch (wt%) | 10 | 10 | 10 |
| HDPE (wt%) | 89.3 | 87 | 87 |
| Oxygen scavenger (wt%): | | | |
| Shelfplus 02 2400 | 0.5 | | |
| Magnesium Chloride (MgCl₂) HMC23D | 0.2 | | |
| Sodium Sulfite (Na₂SO₃) | | 3 | |
| Vitamin C (Ascorbic salt) E302 | | | 3 |

| | | | |
|---|---|---|---|
| * not according to the invention | | | |

Shelfplus 02 2400 is manufactured by Ciba

The Final composition was then formed into caps by injection using the same procedure as in Examples 1 and 2.

### EXAMPLE 7 - nanoclay + EVOH + oxygen scavenger

### Bleeds of nanoclay + EVOH + oxygen scavenger

Blends of a nanoclay (Bentone 109, manufactured by Elementis Specialties), EVOH (SOARNOL ET3803, manufactured by Nippon Gohsei Osaka), an oxygen scavenger (ascorbic acid + ferrous chloride) were dried overnight at 100°C under vacuum and compounded in the ZSK 25 twin screw extruder (manufactured by Werner with a barrel diameter 25 mm and barrel length 42:1 L/D) with a high density polyethylene (Eltex B4020N1343), under the compounding conditions and in the amounts shown below.

### Blend compounding conditions

Screw speed = 200 rpm
Nitrogen setting = maximum
Temperature: TZ1 = 140°C, TZ2 = 145°C, TZ3 = 147°C, TZ4 = TZ5=TDie = 150°C

| EXAMPLE | 7 * |
|---|---|
| Nanoclay (wt%) | 5 |
| EVOH(wt%) | 4 |
| HDPE (wt%) | 86.95 |
| Oxygen scavengers (wt%): | |
| Ascorbic Acid (Vitamin C) | 4 |
| Ferrous Chloride (FeCl₂) | 0.05 |

| | |
|---|---|
| * not according to the invention | |

The final composition was then formed into caps by injection using the same procedure as in Examples 1 and 2.

### EXAMPLE 8 (comparative) - EVOH + Oxygen Scavenger

EVOH (EVAL F171B, manufactured by EVAL EUROPE) which were first dried overnight at 60-100°C under vacuum, and an oxygen scavenger (Shelfplus 02 2400 is manufactured by Ciba) were compounded with a high density polyethylene (Eltex B4020N1343) on an APV-19 (MP19TC-25) twin screw laboratory scale extruder (manufactured by APV Baker with a barrel diameter 19 mm and barrel length 25:1 L/D) under the conditions and in the amounts shown in the Table below.

### EXAMPLES 9 and 10 - EVOH + Oxygen Scavenger + Talc

EVOH (EVAL F171B, manufactured by EVAL EUROPE) which were first dried overnight at 60-100°C under vacuum, an oxygen scavenger (Shelfplus 02 2400, manufactured by Ciba) and talc (Steamic OOS, manufactured by Luzenac Europe) were compounded with a high density polyethylene (Eltex B4020N1343) on an APV-19 (MP19TC-25) twin screw laboratory scale extruder (manufactured by APV Baker) with a barrel diameter 19 mm and barrel length 25:1 L/D under the conditions and in the amounts shown below.

### Compounding conditions

Screw speed = 200 rpm
Nitrogen setting = maximum
Temperature: TZ1 = 175°C, TZ2 = 185°C. TZ3 = 190°C, TZ4 = 200°C TZ5=TDie = 210°C

| EXAMPLE | 8 | 9 * | 10 * |
|---|---|---|---|
| HDPE (wt %) | 93.875 | 90.875 | 92.0 |
| EVOH (wt%) | 5.625 | 5.625 | 4.0 |
| Oxygen scavenger (wt %) | 0.5 | 0.5 | 1.0 |
| Talc (wt %) | NONE | 3.0 | 3.0 |

| | | | |
|---|---|---|---|
| * not according to the invention | | | |

The final compositions were then formed into caps by injection using the same procedure as in Examples 1 and 2.

### Oxygen ingress measurements - Non-Invasive Oxygen Determination (NIOD)

There are several methods available to determine the oxygen permeation, or transmission, into sealed packages such as bottles. In this case, non-invasive oxygen measurement systems (e.g., supplied by OxySense® and PreSens Precision Sensing) based on a fluorescence quenching method for sealed packages were employed. They consist of an optical system with an oxygen sensor spot (e.g., an OxyDot®, which is a metal organic fluorescent dye immobilized in a gas permeable hydrophobic polymer) and a fibre optic reader-pen assembly which contains both a blue LED and photo-detector to measure the fluorescence lifetime characteristics of the oxygen sensor spot (e.g., OxyDot®).

The oxygen measurement technique is based upon the absorption of light in the blue region of the metal organic fluorescent dye of the oxygen sensor spot (e.g., OxyDot®), and fluorescence within the red region of the spectrum. The presence of oxygen quenches the fluorescent light from the dye as well as reducing its lifetime. These changes in the fluorescence emission intensity and lifetime are related to the oxygen partial pressure, and thus they can be calibrated to determine the corresponding oxygen concentration.

The oxygen level within a package such as a bottle can be measured by attaching an oxygen sensor spot (e.g., OxyDot®) inside the package. The oxygen sensor spot is then illuminated with a pulsed blue light from the LED of the fiber optic reader-pen assembly. The incident blue light is first absorbed by the dot and then a red fluorescence light is emitted. The red light is detected by a photo-detector and the characteristic of the fluorescence lifetime is measured. Different lifetime characteristics indicate different levels of oxygen within the package.

### Test Cell A

The test cell for evaluating the barrier performance of a cap against oxygen permeation is constructed from a blow-moulded polyethylene terephthalate (PET) preform of standard PCO28 finish in neck size and design (as used in the industry to blow mould into PET bottle for carbonated soft drinks), and having the following characteristics: weight = 35g, neck size = 28 mm diameter, total tube length = 123.2 mm and wall thickness = 3.24 mm.

The base of the PET preform is seated in a brass block from which two brass tubes of different lengths extend into the preform. The other ends of these tubes terminate outside at leak-proof valves to ensure air-tightness of the test cell (as verified by a high pressure leakage testing procedure). The shorter tube is used to introduce deionised and deoxygenated water into the preform to create a headspace below the 28mm cap which is screwed onto the neck of the preform. The longer tube protrudes into the headspace above the water level, and is used for calibrating the initial oxygen levels within the headspace and the water.

Two pre-calibrated oxygen sensor spot (e.g., OxyDots®) are attached to the inner walls of the preform, one in the headspace (for oxygen detection in the gas phase) and the other in the water (for oxygen detection in the liquid phase detection).

### Experimental method with Test Cell A at 40°C

The cap to be evaluated was first screwed onto the test cell using a pre-defined torque of 25 Ibs-in (unit of torque in pounds-inch). The closed test cell was half-filled with deionised and deoxygenated water (covering the shorter brass tube) and subsequently purged with nitrogen for 24 hours, until the oxygen level in the water stabilised at a level well below 50 ppb.

The OxySense® 4000B detecting system was calibrated at two oxygen concentrations before each measurement: (i) at zero oxygen level using a solution with 1% added sodium sulphite which scavenges and removes all oxygen in the solution (under 24 hours of conditioning in a hermetically sealed test cell); (ii) at 21% oxygen using water at standard ambient condition (which was saturated with oxygen over 24 hours of conditioning). The accuracy of the calibrated detector was subsequently verified by measuring the oxygen level of a pre-mixed nitrogen gas with a fixed concentration (e.g., 0.5% and 2%) of oxygen, from a certified gas bottle provided by the gas suppliers.

For each measurement of the oxygen level within the test cell containing the cap under evaluation, average values were determined from 10 readings made at each of the two OxyDots® (i.e., in the gas and liquid phases) following the appropriate calibrations as described above. All the necessary precautions to account for the effects of temperature and ambient illumination on the oxygen measurements were appropriately taken.

The barrier performance of the caps at 40°C was evaluated continually over a 6 month period, with regular oxygen measurements on 3 samples of each cap mounted on 3 individual test cells, on a test rack that consisted of several test cells with caps of a reference formulation, as well as metallic caps which were evaluated in order to benchmark the reliability and repeatability of the measurements. The test rack was stored in a temperature-regulated room at 40°C, and was removed periodically for oxygen concentration measurements. The measurements were actually taken at room temperature (23°C).

### Experimental method with PET bottle at ambient conditions (23°C)

A PreSens non-invasive and non-destructive oxygen ingress measurement equipment (Fibox 3-trace meter, fibre optic cable and trace oxygen sensor spots) was used to determine the oxygen permeability of the caps at room temperature (23°C). This system is very similar in measurement principle to that of the OxySense^{®} 4000B system, based on the fluorescence quenching method.

For a typical shelf-life test, the trace oxygen sensor spot was first adhered onto the inner side wall of a 500 ml transparent PET bottle having a standard PCO28 finish in neck size and design. The bottle was then filled with deionised and deoxygenated water up to a headspace of 20 ml, inside a nitrogen circulation glove box where the oxygen level of the water inside the bottle was stabilised at a level well below 50 ppb. The cap to be evaluated was then screwed onto the bottle using a pre-defined torque of 18 lbs-in (unit of torque in pounds-inch).

For each formulation, 5 bottles with the formulated caps were employed, together with 5 reference bottles sealed with caps with metallic plates inside to monitor the ingress of oxygen through only the wall of the bottles. These bottles were then stored at ambient conditions and the oxygen ingresses were monitored as a function of time using the PreSens oxygen ingress measurement equipment.

At a given time of measurements, an average value was first obtained from several readings (about 10) taken on the output of the trace oxygen spot for each bottle. This was then repeated for all the 5 bottles so as to achieve an overall averaged value for the oxygen ingress through the formulated cap and the wall of the bottle.

The similar exercise was performed at the same time to obtain the overall averaged oxygen ingress through only the wall of the reference bottles sealed with metallic caps. Thus, for a given time, the oxygen ingress through the formulated caps will be given by the differences of two averaged values.

### RESULTS

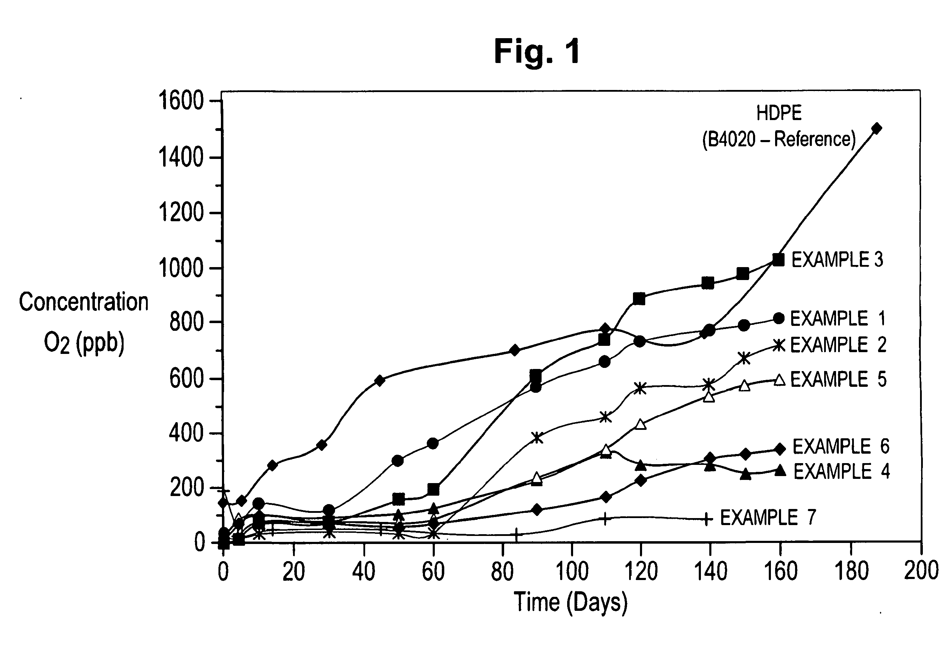

The results for caps conditioned at 40°C, using the OxySense® 4000B detecting system, are shown in Tables 1 and 2 below, and are represented graphically in Figure 1. It can be seen that the compositions of the invention provide significantly better barrier properties than the comparative examples and the control. Indeed it can be seen that some of the comparative Examples are not significantly better than the control, showing that barrier performance is not always predictable.

**TABLE 1**

| Time (days) | Oxygen Concentration in ppb (measured by OxyDot in the liquid phase of the preform) | | | | | |
|---|---|---|---|---|---|---|
| | EX I (comp) | EX 2 (comp) | EX 3 (comp) | EX 4 | EX 5 | EX 6 |
| 0 | 41 | 16 | 10 | 1 | 17 | 8 |
| 4 | 14 | 20 | 16 | 33 | 87 | 67 |
| 10 | 142 | 36 | 73 | 75 | 98 | 102 |
| 30 | 117 | 44 | 76 | 91 | 77 | 74 |
| 50 | 298 | 34 | 153 | 104 | 72 | 59 |
| 60 | 361 | 36 | 189 | 124 | 84 | 70 |
| 90 | 568 | 380 | 606 | 225 | 235 | 118 |
| 110 | 656 | 459 | 735 | 327 | 337 | 164 |
| 120 | 725 | 562 | 882 | 281 | 430 | 224 |
| 140 | 766 | 574 | 937 | 279 | 532 | 300 |
| 150 | 783 | 667 | 971 | 246 | 572 | 317 |
| 160 | 806 | 711 | 1025 | 260 | 592 | 334 |

**TABLE 2**

| Time (Days) | Oxygen Concentration in ppb (measured by OxyDot in the liquid phase of the preform) | |
|---|---|---|
| | EXAMPLE 7 | REFERENCE (B4020) |
| 0 | 19 | 147 |
| 5 | 30 | 153 |
| 14 | 49 | 281 |
| 28 | 52 | 356 |
| 45 | 48 | 592 |
| 84 | 29 | 695 |
| 110 | 87 | 771 |
| 139 | 83 | 755 |
| 188 | 426 | 1494 |

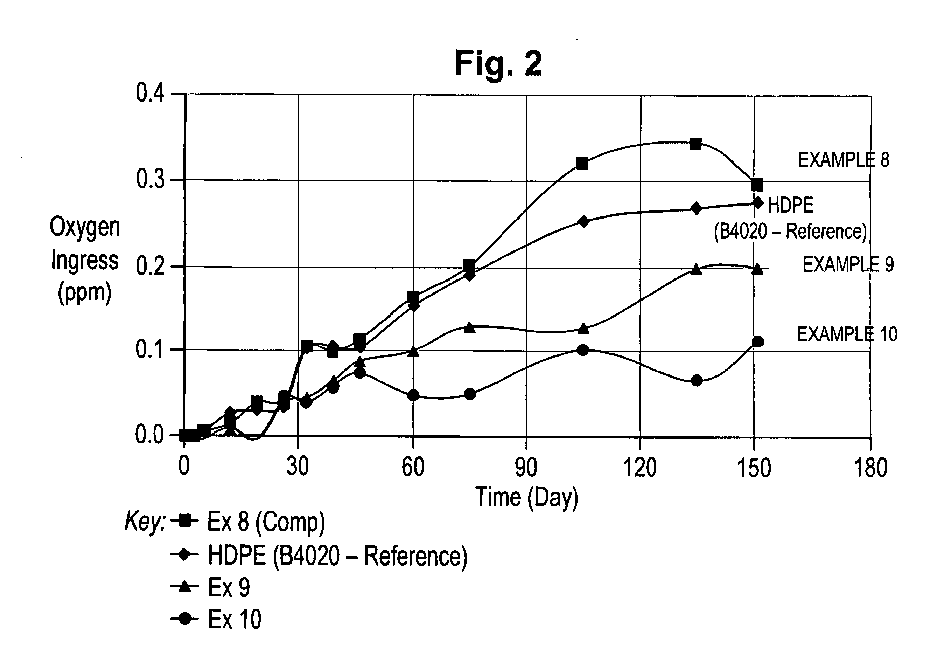

The results for caps conditioned at ambient conditions (23°C), using the PreSens detecting system, are shown in Table 3 below, and are represented graphically in Figure 2. It can be seen that the compositions of the invention provide significantly better barrier properties than the comparative examples and the control.

**TABLE 3**

| Time (days) | Oxygen Concentration in ppm (measured in the liquid phase by Sensor Spot inside wall of capped bottle) | | | |
|---|---|---|---|---|
| | EX8 (comp) | EX 9 | EX 10 | REFERENCE (B4020) |
| 1 | 0 | 0 | 0 | 0 |
| 3 | -0.003 | 0.001 | -0.001 | -0.010 |
| 5 | 0.005 | -0.004 | 0.003 | 0.004 |
| 12 | 0.014 | 0.009 | 0.008 | 0.027 |
| 19 | 0.038 | -0.005 | -0.006 | 0.029 |
| 26 | 0.042 | 0.038 | 0.044 | 0.034 |
| 32 | 0.104 | 0.043 | 0.038 | 0.102 |
| 39 | 0.099 | 0.063 | 0.058 | 0.104 |
| 46 | 0.113 | 0.087 | 0.072 | 0.103 |
| 60 | 0.165 | 0.100 | 0.046 | 0.154 |
| 75 | 0.203 | 0.129 | 0.049 | 0.193 |
| 105 | 0.322 | 0.127 | 0.101 | 0.254 |
| 135 | 0.346 | 0.200 | 0.063 | 0.269 |
| 151 | 0.297 | 0.202 | 0.111 | 0.275 |

## Claims

1. Composition comprising
70 - 95 wt% of a polyolefin, and incorporated in said polyolefin -
0.1 - 10 wt% of an ethylene-vinyl alcohol polymer containing between 27mol% and 44mol% of ethylene units;
0.1 *-* 5 wt% of an active oxygen scavenger;
0.1 - 10 wt% of either a clay having an aspect ratio of at least 10, preferably at least 20, more preferably at least 50, or a nucleating agent, or a polyamide optionally containing such a clay or nucleating agent; and
0.1 - 5 wt% of a compatibiliser.

2. Composition according to claim 1, wherein the polyolefin is high density polyethylene (HDPE), low density polyethylene (LDPE), linear low density polyethylene (LLDPE), polypropylene, or a block copolymer of polypropylene and polyethylene.

3. Composition according to claim 1 or 2, wherein the polyamide is a polyamide 6 based nylon, preferably nylon 6, nylon 6,6 and nylon 6,12, or a metaxylene diamine 6 nylon (MXD6).

4. Composition according to any preceding claim, wherein the ethylene-vinyl alcohol polymer contains 27-38 mol% of ethylene units.

5. Composition according to any preceding claim, wherein the oxygen scavenger comprises a metal-based reducing agent, preferably a reducing iron powder, a reducing zinc powder, a reducing tin powder, a low-valence metal oxide, or a reducing metal compound.

6. Composition according to any preceding claim, wherein the compatibiliser is a maleic anhydride modified linear low-density polyethylene.

7. Composition according to any preceding claim, wherein the clay having a high aspect ratio is a nanoclay.

8. Composition according to claim 7, wherein the nanoclay is a smectite clay, preferably bentonite or hectorite.

9. Composition according to any of claims 1 to 6, wherein the nucleating agent is an inorganic filler having a sedimentation particle size distribution (Sedigraph 5100) **characterised by** d50 ≤ 2.5 µm and d95 ≤ 6.5 µm, where d50 is the average equivalent spherical diameter at 50 cumulative mass % and d95 is the average equivalent spherical diameter at 95 cumulative mass %, preferably talc.

10. Composition according to any preceding claim, wherein the amount of polyamide, nucleating agent or nanoclay, or polyamide containing a nanoclay or nucleating agent, is from 0.2 to 5 wt%.

11. Composition according to any preceding claim, wherein when a polyamide containing a nanoclay or nucleating agent is present, the amount of nanoclay or nucleating agent in the polyamide is preferably between 0.1 and 2wt% based on the total weight of nanoclay/nucleating agent plus polyamide.

12. Composition according to any preceding claim, wherein the amount of ethylene-vinyl alcohol polymer is from 3 to 8 wt%,

13. Composition according to any preceding claim, wherein the amount of oxygen scavenger is from 0.5 to 5 wt%.

14. Container or closure member, preferably a monocomponent cap, comprising a composition as defined in any preceding claim.

## Patentansprüche

1. Zusammensetzung umfassend
70 bis 95 Gew.-% eines Polyolefins, und enthalten in diesem Polyolefin
0,1 bis 10 Gew.-% eines Ethylenvinylalkoholpolymers enthaltend zwischen 27 Mol-% und 44 Mol-% Ethylen-Einheiten;
0,1 bis 5 Gew.-% eines aktiven Sauerstoff-Scavengers bzw. Sauerstoff entfernenden Zusammensetzung;
0,1 bis 10 Gew.-% entweder eines Tons mit einem Seitenverhältnis von wenigstens 10, vorzugsweise wenigstens 20, noch bevorzugter wenigstens 50, oder ein Keimbildungsmittel, oder eines Polyamids, welches gegebenenfalls solch einen Ton oder Keimbildungsmittel enthält; und
01, bis 5 Gew.-% eines Kompatibilizers.

2. Zusammensetzung nach Anspruch 1, wobei das Polyolefin Polyethylen mit hoher Dichte (HDPE), Polyethylen mit niedriger Dichte (LDPE), lineares Polyethylen mit niedriger Dichte (LLDPE), Polypropylen oder ein Blockcopolymer aus Polypropylen und Polyethylen ist.

3. Zusammensetzung nach Anspruch 1 oder 2, wobei das Polyamid ein auf Polyamid 6 basierendes Nylon ist, vorzugsweise Nylon 6, Nylon 6,6 und Nylon 6,12, oder ein Metaxyloldiamin-6-Nylon (MXD6).

4. Zusammensetzung nach einem der vorangehenden Ansprüche, wobei das Ethylenvinylalkoholpolymer 27 bis 38 Mol-% Ethylen-Einheiten enthält.

5. Zusammensetzung nach einem der vorangehenden Ansprüche, wobei die Sauerstoff entfernende Zusammensetzung ein Reduktionsmittel auf Metallbasis umfasst, vorzugsweise ein reduzierendes Eisenpulver, ein reduzierendes Zinkpulver, ein reduzierendes Zinnpulver, ein Metalloxid mit niedriger Wertigkeit oder eine reduzierende Metallverbindung.

6. Zusammensetzung nach einem der vorangehenden Ansprüche, wobei der Kompatibilizers ein mit Maleinanhydrid modifiziertes lineares Polyethylen mit niedriger Dichte ist.

7. Zusammensetzung nach einem der vorangehenden Ansprüche, wobei der Ton mit einem großen Seitenverhältnis ein Nanoclay ist.

8. Zusammensetzung nach Anspruch 7, wobei der Nanoclay Smectitton, vorzugsweise Bentonit oder Hectorit ist.

9. Zusammensetzung nach einem der Ansprüche 1 bis 6, wobei der Keimbildner ein anorganischer Füllstoff ist, mit einer Sedimentationspartikelgrößenverteilung (Sedigraph 5100), **gekennzeichnet durch** d50 ≤ 2,5 µm und d95 ≤6,5 µm, wobei d50 der mittlere äquivalente sphärische Durchmesser bei 50 kumulativen Masse-% ist, und d95 der mittlere äquivalente sphärische Durchmesser bei 95 kumulativen Masse-%, vorzugsweise Talk.

10. Zusammensetzung nach einem der vorangehenden Ansprüche, wobei der Anteil an Polyamid, Keimbildner oder Nanoclay, oder an Polyamid enthaltend einen Nanoclay oder Keimbildner zwischen 0,2 bis 5 Gew.-% beträgt.

11. Zusammensetzung nach einem der vorangehenden Ansprüche, wobei, wenn ein Polyamid enthaltend einen Nanoclay oder Keimbildner vorhanden ist, der Anteil an Nanoclay oder Keimbildner in dem Polyamid vorzugsweise zwischen 0,1 und 2 Gew.-% beträgt, basierend auf dem Gesamtgewicht des Nanoclay/Keimbildner plus Polyamid.

12. Zusammensetzung nach einem der vorangehenden Ansprüche, wobei die Menge an Ethylenvinylalkoholpolymer zwischen 2 bis 8 Gew.-% beträgt.

13. Zusammensetzung nach einem der vorangehenden Ansprüche, wobei die Menge der Sauerstoff entfernenden Zusammensetzung zwischen 0,5 bis 5 Gew.-% beträgt.

14. Behälter oder Verschlusselement, vorzugsweise ein einkomponentiger Verschluss, umfassend eine Zusammensetzung wie in einem der vorangehenden Ansprüche definiert.

## Revendications

1. Composition comprenant
70-95 % en masse d'une polyoléfine, et incorporés dans ladite polyoléfine-
0,1-10 % en masse d'un polymère d'éthylène-alcool vinylique contenant de 27 % en mol à 44 % en mol d'unités éthylène;
0,1-5 % en masse d'un fixateur d'oxygène actif ;
0,1-10 % en masse soit d'un argile présentant un rapport d'allongement d'au moins 10, de préférence d'au moins 20, encore mieux d'au moins 50, ou un agent de nucléation, ou d'un polyamide contenant éventuellement un tel argile ou agent de nucléation ; et
0,1-5 % en masse d'un agent de compatibilité.

2. Composition selon la revendication 1, dans laquelle la polyoléfine est du polyéthylène haute densité (HDPE), du polyéthylène faible densité (LDPE), du polyéthylène linéaire faible densité (LLDPE), du polypropylène ou un copolymère séquencé de polypropylène et de polyéthylène.

3. Composition selon la revendication ou 2, dans laquelle le polyamide est un nylon à base de polyamide 6, de préférence le nylon 6, le nylon 6,6 et le nylon 6,12 ou un nylon de métaxylène diamine 6 (MXD6).

4. Composition selon l'une quelconque des revendications précédentes, dans laquelle le polymère d'éthylène-alcool vinylique contient 27-38 % en mol d'unités éthylène.

5. Composition selon l'une quelconque des revendications précédentes, dans laquelle le fixateur d'oxygène comprend un agent de réduction à base de métal, de préférence une poudre de fer réductrice, une poudre de zinc réductrice, une poudre d'étain réductrice, un oxyde de métal de faible valence ou un composé de métal réducteur.

6. Composition selon l'une quelconque des revendications précédentes, dans laquelle l'agent de compatibilité est un polyéthylène faible densité linéaire (anhydride maléique)-modifié.

7. Composition selon l'une quelconque des revendications précédentes, dans laquelle l'argile présentant un rapport d'allongement élevé est un nanoargile.

8. Composition selon la revendication 7, dans laquelle le nanoargile est un argile de smectite, de préférence la bentonite ou l'hectorite.

9. Composition selon l'une quelconque des revendications 1 à 6, dans laquelle l'agent de nucléation est une charge inorganique ayant une distribution de taille de particule de sédimentation (Sedigraph 5100) **caractérisée par** d50 ≤ 2,5 µm et d95 ≤ 6,5 µm, dans laquelle d50 est le diamètre sphérique équivalent moyen pour 50 % de masse cumulée et d95 est le diamètre sphérique moyen équivalent pour 95 % de masse cumulés, de préférence la stéatite.

10. Composition selon l'une quelconque des revendications précédentes, dans laquelle la quantité de polyamide, d'agent de nucléation ou de nanoargile, ou de polyamide contenant un nanoargile ou un agent de nucléation, est de 0,2 à 5 % en masse.

11. Composition selon l'une quelconque des revendications précédentes, dans laquelle lorsqu'un polyamide contenant un nanoargile ou un agent de nucléation est présent, la quantité de nanoargile ou d'agent de nucléation dans le polyamide est de préférence de 0,1 à 2 % en masse rapportés à la masse totale de nanoargile/agent de nucléation plus polyamide.

12. Composition selon l'une quelconque des revendications précédentes, dans laquelle la quantité de polymères d'éthylène-alcool vinylique est de 3 à 8 % en masse.

13. Composition selon l'une quelconque des revendications précédentes, dans laquelle la quantité de fixateur d'oxygène est de 0,5 à 5 % en masse.

14. Récipient ou élément de fermeture, de préférence couvercle monoconstituant, comprenant une composition comme définie dans l'une quelconque des revendications précédentes.
